# EUROPEAN PATENT APPLICATION

(11) **EP 4 601 077 A1**
(43) Date of publication of application: **13.08.2025**
(21) Application number: 24221926.9
(22) Date of filing: 19.12.2024
(51) Int. Cl.: H01M 10/613, H01M 10/647, H01M 10/6551, H01M 10/6562, H01M 50/211, H01M 50/105

(54) **BATTERY CELL AND BATTERY DEVICE HAVING THE SAME**

(30) Priority: 07.02.2024 KR 20240018938
(71) Applicant: SK On Co., Ltd., Seoul 03161 (KR)
(72) Inventor: PARK, Sun Woo, 34124 Daejeon (KR)
(74) Representative: Stolmár & Partner Patentanwälte PartG mbB

(57) **Abstract**

A battery device includes a cell assembly, including a first battery cell and a second battery cell, stacked in a first direction. The first battery cell and the second battery cell respectively include a receiving portion in which an electrolyte and an electrode assembly are received within a case, and a plurality of extension portions protruding outwardly from the receiving portion in the first direction. The second battery cell is disposed to contact at least one of the extension portions of the first battery cell.

## Description

### TECHNICAL FIELD

The disclosure relates to a battery cell and a battery device having the same.

### BACKGROUND

Secondary batteries, unlike primary batteries, may be charged and discharged, and may be applied to devices within various fields such as digital cameras, mobile phones, laptops, hybrid cars, and electric vehicles. Among secondary batteries, much research is being conducted on lithium secondary batteries, which have high energy density and discharge voltage. Lithium secondary batteries may be manufactured as flexible pouch-type battery cells, rigid prismatic battery cells, or cylindrical can-type battery cells.

Multiple battery cells may be mounted in a case as the unit of cell assemblies that are electrically connected by being stacked to each other, and are manufactured as battery devices such as battery modules or battery packs, and are installed in electric vehicles, or the like.

Since these battery devices generate heat from the battery cells during operation, a structure that may effectively release this heat is required.

### SUMMARY

The present disclosure may be implemented in some embodiments to provide a battery cell and a battery device, in which a heat dissipation effect of a battery cell may be increased.

A battery device in the present disclosure may be widely applied to green technology fields such as electric vehicles, battery charging stations, and solar power generation and wind power generation using batteries. In addition, the battery device in the present disclosure may be used in eco-friendly electric vehicles, hybrid vehicles and the like to prevent climate change by suppressing air pollution and greenhouse gas emissions.

In some embodiments, a battery device includes a cell assembly, including a first battery cell and a second battery cell, stacked in a first direction. The first battery cell and the second battery cell respectively include a receiving portion in which an electrolyte and an electrode assembly are received within a case, and a plurality of extension portions protruding outwardly from the receiving portion in the first direction. The second battery cell is disposed to contact at least one of the extension portions of the first battery cell.

The extension portions may be respectively disposed to at least partially face the electrode assembly.

The first battery cell and the second battery cell may be provided with an air gap therebetween, and a gap of the air gap may correspond to a protruding length of the extension portions.

At least one of extension portions of the first battery cell may have a protruding end contacting one of extension portions of the second battery cell.

The first battery cell and the second battery cell may be disposed such that at least a portion of a groove portion formed between the extension portions of the first battery cell overlaps a groove portion formed between the extension portions of the second battery cell.

At least one of the extension portions of the first battery cell may be disposed within the groove portion of the second battery cell.

The extension portions may each have a width narrowing away from the electrode assembly.

The extension portions may respectively protrude from the receiving portion in an angular shape.

The plurality of extension portions may be provided by drawing-processing the case, and an internal space of each of the extension portions may be filled with the electrolyte.

The extension portions may be respectively provided in a form of a straight line, parallel to a longitudinal direction of the electrode assembly.

In some embodiments, a battery cell includes an electrolyte and an electrode assembly sealed inside a case. The case includes a plurality of extension portions protruding outwardly of the battery cell in a thickness direction, and the electrolyte is filled inside the extension portions.

At least two of the plurality of extension portions may be spaced apart from each other by a predetermined distance on one surface of the case.

### BRIEF DESCRIPTION OF DRAWINGS

Certain aspects, features, and advantages of the present disclosure are illustrated by the following detailed description with reference to the accompanying drawings.
FIG. 1 is a perspective view of a battery cell according to an embodiment.
FIG. 2 is a partially exploded view of the battery cell illustrated in FIG. 1.
FIG. 3 is a cross-sectional view taken along line I-I' of FIG. 1.
FIG. 4 is a cross-sectional view illustrating a method of manufacturing a case illustrated in FIG. 2.
FIG. 5 is a perspective view of a battery device according to an embodiment.
FIG. 6 is an exploded perspective view of the battery device illustrated in FIG. 5.
FIG. 7 is a cross-sectional view taken along line II-II' of FIG. 5.
FIG. 8 is a cross-sectional view of a battery device according to another embodiment.
FIG. 9 is a cross-sectional view of a battery device according to yet another embodiment.

### DETAILED DESCRIPTION

Features of the present disclosure disclosed in this patent document are described by example embodiments with reference to the accompanying drawings.

Hereinafter, the present disclosure will be described in detail with reference to the attached drawings. However, this is merely illustrative and the present disclosure is not limited to the detailed embodiments described as illustrative.

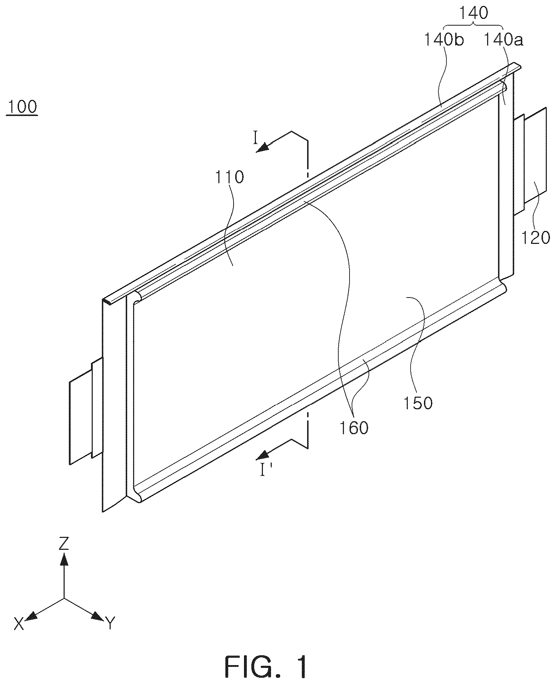

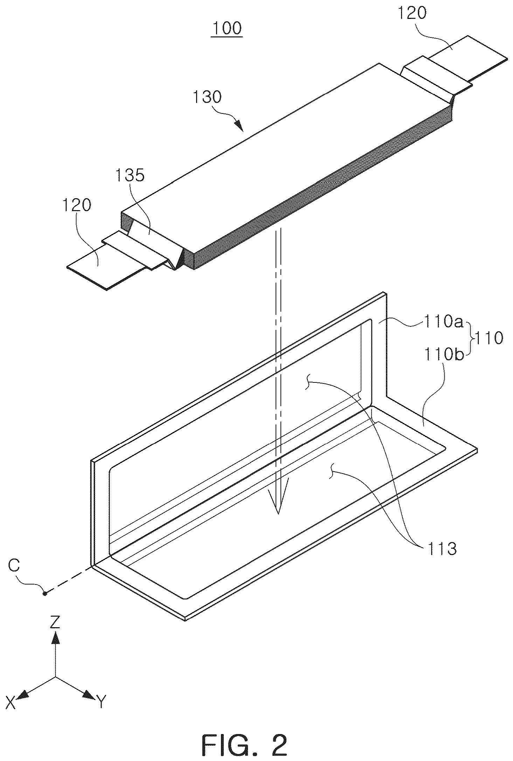

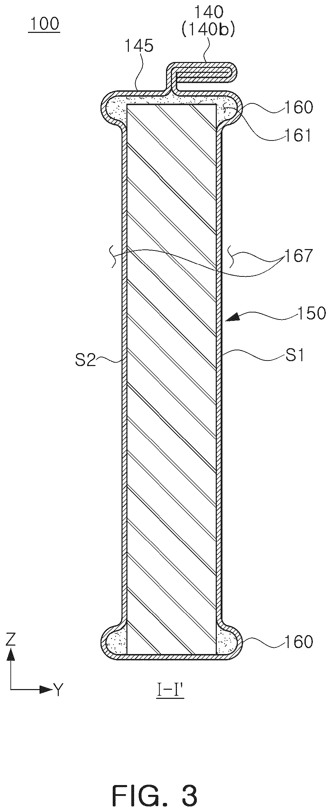

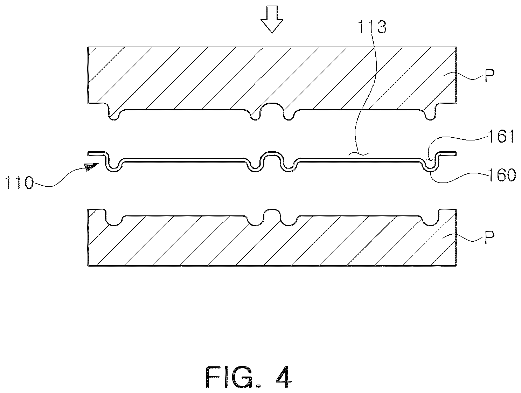

FIG. 1 is a perspective view of a battery cell according to an embodiment, and FIG. 2 is a partially exploded view of the battery cell illustrated in FIG. 1. In addition, FIG. 3 is a cross-sectional view taken along line I-I' of FIG. 1, and FIG. 4 is a cross-sectional view illustrating a method of manufacturing a case illustrated in FIG. 2.

Referring to FIGS. 1 to 4, a battery cell 100 according to an example embodiment may include an electrode assembly 130 and a case 110 accommodating the electrode assembly 130.

The battery cell 100 according to the present embodiment is a rechargeable secondary battery and may include a lithium ion (Li-ion) battery or a nickel metal hydride (Ni-MH) battery. These secondary batteries have a large capacity per unit volume, and may thus be used as energy sources for electric vehicles (EVs) and hybrid vehicles (HEVs), as well as in various fields such as energy storage.

The battery cell 100 of the present embodiment may include a pouch-type battery cell in which an electrode assembly 130 and an electrolyte are contained in a pouch-type case.

In an embodiment, the battery cell is a battery cell in which an electrolyte and an electrode assembly are sealed in a case, and the case includes a plurality of extension portions formed to protrude outwardly along the thickness direction of the battery cell, and the electrolyte may be filled inside the extension portions.

According to an embodiment, at least two of the plurality of extension portions may be disposed to be spaced apart from each other at a predetermined distance on one surface of the case.

As illustrated in FIG. 2, the case 110 of the battery cell 100 may be formed by folding a sheet-shaped outer material. Therefore, in describing the present embodiment, the case and the outer material may be understood as the same element.

The case 110 forms the overall exterior of the battery cell 100, and may seal the electrolyte and electrode assembly 130 accommodated inside thereof to protect the same from the external environment. The case 110 may use an outer material in the form of a pouch in which the surface of a metal film is insulated. The metal film may be formed of aluminum, and modified polypropylene as a polymer resin, for example, Casted Polypropylene (CPP), may be applied to one side of the metal film to form a heat-sealed layer, and a resin material such as nylon or polyethylene terephthalate (PET) may be formed on the opposite side.

For example, the battery cell 100 of the present embodiment may be manufactured through operations of forming a receiving space 113 in a single sheet of outer material using a method such as forming or the like, an operation of accommodating an electrode assembly 130 in the receiving space 113, an operation of folding the outer material along a fold line (C), and an operation of sealing the receiving space 113 by joining the edges where the cases 110 touch each other. A heat-melting method may be used as a method of joining the edges, but is not limited thereto.

Hereinafter, a portion of the case 110 that forms the receiving space 113 is referred to as a receiving portion 150, and the edge area where the outer material is joined along the perimeter of the receiving portion is referred to as a sealing portion 140.

In this embodiment, the sealing portion 140 may be divided into a first sealing portion 140a formed in the part where an electrode lead 120 is placed, and a second sealing portion 140b formed in the part where the electrode lead 120 is not placed.

The sealing portion 140 may be formed in the form of a flange that extends outward from the receiving portion 150. Accordingly, the sealing portion 140 may be placed along the edge of the receiving portion 150.

In addition, the battery cell 100 of this embodiment may configure the second sealing portion 140b in a form that is folded at least once to increase the bonding reliability of the sealing portion 140 and increase the energy density.

The case 110 of this embodiment may be divided into a first case 110a and a second case 110b based on the folding line (C) where the outer material is folded. The first case 110a and the second case 110b may respectively be partially provided with a receiving space 113. However, the configuration of the present disclosure is not limited thereto, and various modifications are possible, such as providing the receiving space 113 in only one of the first case 110a and the second case 1 10b. In addition, the first case 110a and the second case 110b may also be formed with independent outer materials, respectively.

The electrode assembly 130 may be accommodated together with the electrolyte in the receiving portion 150 of the case 110. The electrode assembly 130 may include a plurality of electrodes divided into positive and negative electrode plates, and a separator disposed between the positive and negative electrode plates to electrically/physically separate the positive and negative electrode plates. The overall shape of the electrode assembly 130 of the present embodiment may be formed as a rectangular parallelepiped. However, the shape of the electrode assembly 130 is not limited thereto.

The electrode assembly 130 has electrode tabs 135 protruding outwardly from a plurality of positive and negative electrode plates, and respective electrode tabs 135 may be connected to electrode leads 120 so that the same polarities contact each other. The electrode tabs 135 may be disposed on terraces 145. In the present embodiment, the terrace 145 may refer to a space formed around the electrode assembly 130 in the receiving portion 150 and a portion thereof corresponding thereto. Therefore, the terrace 145 may be defined as a portion corresponding to the electrode assembly 130 and the sealing portion 140 in the case 110 or a portion of the case 110 that does not contact the electrode assembly 130.

The electrode lead 120 is electrically connected to the electrode assembly 130 within the receiving portion 150, and a portion thereof may be exposed to the outside of the case 110. In the battery cell 100 of the present embodiment, two electrode leads 120 may be disposed face in opposite directions. However, the present disclosure is not limited thereto, and the two electrode leads 120 may also be disposed to face in the same direction.

In addition, in the case of the battery cell 100 of the present embodiment, an extension portion 160 may be formed in the case 110.

The extension portion 160 is a portion of the case 110 forming the receiving portion 150, protruding outwardly, and the extension portion 160 of the present embodiment may protrude in the first direction (for example, ±Y direction) in which the battery cells 100 are stacked in the battery device 10 described below. In the present embodiment, the battery cells 100 may be stacked in the thickness direction of the receiving portion 150 or in the thickness direction of the battery cell 100. Accordingly, the extension portion 160 may be formed to protrude outwardly from the receiving portion 150 along the thickness direction of the receiving portion 150.

As illustrated in FIG. 4, the extension portion 160 may be formed together with the receiving space 113 in the process of forming the receiving space 113 of the case 110 using a mold (P). Therefore, the extension portion 160 may be formed in the form of an outwardly convex protrusion from the receiving portion 150. The extension portion 160 of the present embodiment may be formed by drawing-processing the case 110, and thus an internal space 161 of the extension portion 160 may be formed in the form of a groove portion to expand the volume of the receiving space 113.

The internal space 161 of the extension portion 160 may be filled with an electrolyte. Accordingly, the battery cell 100 of the present embodiment may contain more electrolyte, so that the battery lifespan may be extended.

In the present embodiment, the extension portion 160 may be formed in an area corresponding to the edge of the electrode assembly 130 in the case 110. Accordingly, the extension portion 160 may be positioned adjacent to the terrace 145, or may be partially positioned on the terrace 145. In addition, it is also possible to form the entire extension portion 160 on the terrace 145 as needed.

In this embodiment, the extension portion 160 may be formed in the form of a straight line, parallel to the longitudinal direction (for example, X-direction) of the electrode assembly 130, and at least a portion of the extension portion 160 may be disposed to face the electrode assembly 130.

The extension portion 160 may be formed on the first surface S1 and the second surface S2 of the receiving portion 150 disposed along the thickness direction of the receiving portion 150, respectively. In this case, the first surface S1 and the second surface S2 of the receiving portion 150 may refer to areas that face relatively wide sides of the electrode assembly 130 in the case 110 forming the receiving portion 150.

The extension portion 160 may be formed on at least one of the first surface S1 and the second surface S2. For example, the extension portions 160 may be formed in plural in parallel on the first surface S1 and the second surface S2 of the receiving portion 150, respectively. The extension portions may be disposed to at least partially face the electrode assembly.

As the plurality of extension portions 160 are formed to protrude outwardly from the receiving portion 150, a groove portion 167, which is a space in the form of a groove portion, may be formed between two extension portions 160 formed on one side of the receiving portion 150.

The groove portion 167 may be used as a passage through which a fluid such as air passes when a plurality of battery cells 100 are stacked. Accordingly, the protruding length of the extension portion 160 or the width of the extension portion 160 may be changed in various manners as long as the shape of the extension portion 160 or the groove portion 167 described above may be maintained.

Next, a battery device 10 including a battery cell 100 of the present embodiment will be described.

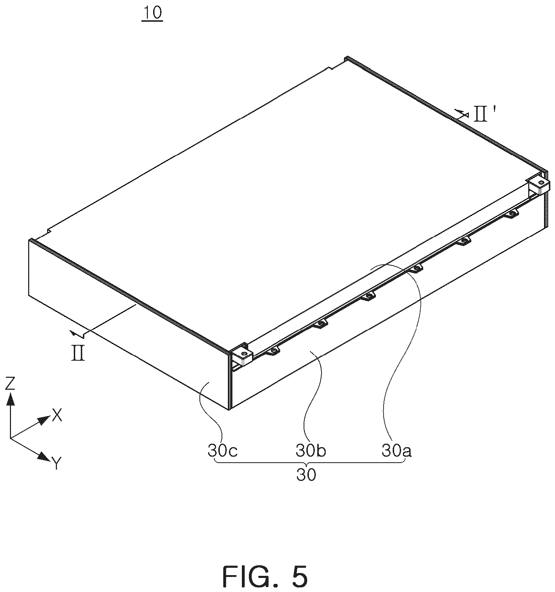

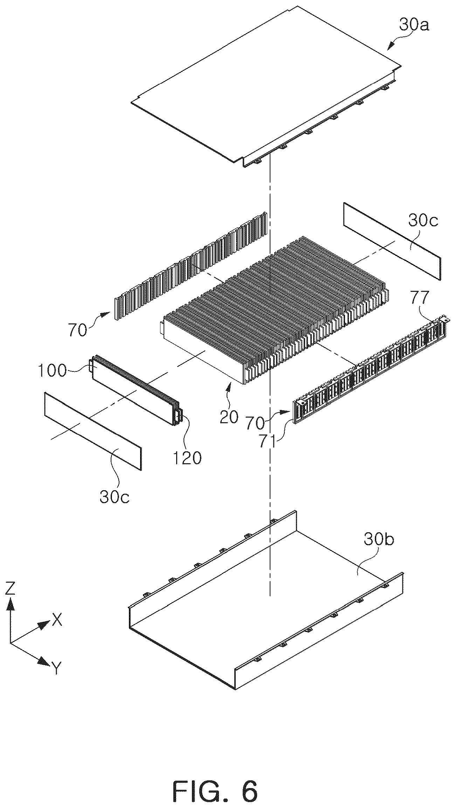

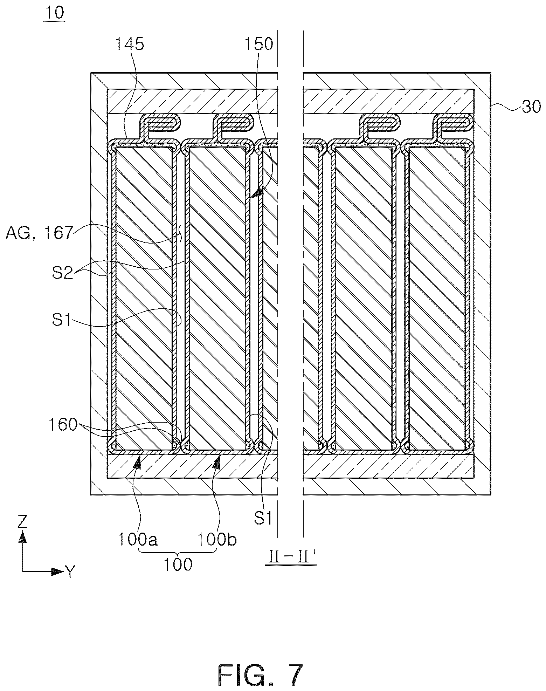

FIG. 5 is a perspective view of a battery device according to an embodiment, FIG. 6 is an exploded perspective view of the battery device illustrated in FIG. 5, and FIG. 7 is a cross-sectional view taken along line II-II' of FIG. 5.

Referring to FIGS. 5 to 7, the battery device 10 according to an embodiment may include a cell assembly 20, a busbar assembly 70, and a housing 30.

In an embodiment, the battery device includes a cell assembly in which a first battery cell and a second battery cell are stacked in a first direction, and each of the first battery cell and the second battery cell includes a receiving portion in which an electrolyte and an electrode assembly are received in a case and a plurality of extension portions that protrude outwardly from the receiving portion in the first direction, and the second battery cell may be disposed to contact at least one of the extension portions of the first battery cell.

The cell assembly 20 may be formed by combining a plurality of the battery cells 100 described above, and the mutually stacked state may be fixed by tape, brackets or the like. In this embodiment, a plurality of battery cells 100 may be vertically erected in the housing 30 and mutually stacked in the first direction, which is the thickness direction of the receiving portion 150, and thus the cell assembly 20 may be formed in an overall hexahedral shape.

The busbar assembly 70 may be respectively disposed on the sides where the electrode leads 120 of the battery cells 100 are disposed and may be combined with the cell assembly 20, and each busbar assembly 70 may include at least one busbar 77 and an insulating frame 71.

The insulating frame 71 is formed of an insulating material, and may be formed to have a size corresponding to the entire side of the cell assembly 20, facing the busbar assembly 70.

The insulating frame 71 may be provided with a plurality of through holes, and the electrode leads 120 may pass through the through holes and be connected to the busbar 77.

The busbar 77 may be formed in the form of a conductive metal plate, and at least a portion of the busbar may be embedded in the interior of the insulating frame 71 or attached to the outer surface of the insulating frame 71. The battery cells 100 may be electrically connected to each other through the busbar 77. To this end, the electrode leads 120 may be joined to the busbar 77 by a method such as welding or the like.

In the case of the busbar 77, a plurality of busbars 77 may be disposed in parallel and spaced apart along the stacking direction of the battery cells 100, and at least two battery cells 100 may be combined with one busbar 77.

The housing 30 defines the exterior of the battery device 10, and may protect the cell assembly 20 from the external environment by accommodating the cell assembly 20 inside thereof. At the same time, the housing 30 of the present embodiment may be used as a heat dissipation member of the cell assembly 20.

The housing 30 may be provided in a form that surrounds the entirety or part of the cell assembly 20. The housing 30 may be formed of a metal material to secure rigidity, but is not limited thereto. In addition, at least a portion of the housing 30 may be formed of aluminum to enhance the heat dissipation effect.

For easy manufacturing of the battery device 10, the housing 30 may be divided into a plurality of pieces. The housing 30 of the present embodiment may include, but is not limited to, a first housing 30a covering the upper portion of the cell assembly 20, a second housing 30b covering the lower portion of the cell assembly 20, and a third housing 30c covering the side of the cell assembly 20.

In addition, the cell assembly 20 of the present embodiment may have at least one air gap (AG). The air gap (AG) may be a space formed by the groove portion 167 of the battery cell 100 described above. Accordingly, the air gap (AG) may be formed between the first battery cell and the second battery cell, and a gap of the air gap (AG) may be formed corresponding to the protruding length of the extension portion 160.

Among the battery cells 100 constituting the cell assembly 20, a first battery cell 100a and a second battery cell 100b that are disposed in series may be in contact with each other through at least one extension portion 160. The first battery cell 100a may be in contact with at least one of the extension portions 160 of the second battery cell 100b, and for example, the first battery cell 100a may be disposed to be in contact with the second battery cell 100b only through the extension portion 160 of the second battery cell 100b.

In addition, in the present embodiment, at least one of the extension portions 160 of the first battery cell 100a may have a protruding end in contact with one of the extension portions 160 of the second battery cell 100b. In detail, when the first battery cell 100a and the second battery cell 100b are mutually stacked in the first direction, the extension portion 160 formed on the first surface S1 of the first battery cell 100a and the extension portion 160 formed on the second surface S2 of the second battery cell 100b may be disposed so that ends thereof contact each other. Accordingly, when the first battery cell 100a and the second battery cell 100b are mutually stacked, one air gap (AG) may be formed between the first battery cell 100a and the second battery cell 100b, and the one air gap (AG) may be formed as a space where a groove portion 167 of the first battery cell 100a and a groove portion 167 of the second battery cell 100b are combined. However, the present disclosure is not limited thereto, and it is also possible to configure one groove portion 167 to form one air gap (AG), as in the embodiment described below.

The air gap (AG) configured in this manner may be used as a cooling path through which air flows and cools the battery cell 100. Therefore, in the battery device 10 of the present embodiment, a cooling path may be formed between the battery cells 100 without inserting a separate member between the battery cells 100.

In addition, the air gap (AG) may be used as a space in which the battery cell 100 expands. In the case in which the battery cell 100 expands due to a battery swelling phenomenon, or the like, the battery cell 100 may expand in a form that reduces the air gap (AG). Therefore, even if the first battery cell 100a expands, the effect on the second battery cell 100b may be significantly reduced. In this manner, the battery device 10 of the present embodiment may suppress deformation of the exterior of the cell assembly 20 due to the swelling phenomenon occurring in a specific battery cell 100.

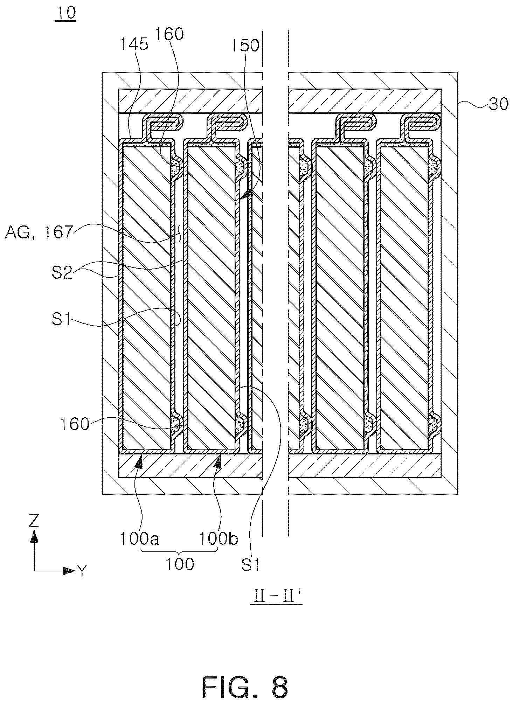

FIG. 8 is a cross-sectional view of a battery device according to another embodiment, and illustrates a cross-section corresponding to II-II' of FIG. 5.

Referring to FIG. 8, a battery cell 100 according to an embodiment may have an extension portion 160 formed only on one of a first surface S1 and a second surface S2 of a receiving portion 150. Therefore, the extension portion 160 formed on the first surface S1 of the first battery cell 100a may contact the second surface S2 of two sides of the second battery cell 100b, on which the extension portion 160 is not formed. Therefore, in this embodiment, one air gap (AG) may be formed by one groove portion 167.

In addition, the battery cell 100 of this embodiment may be formed so that the entirety of the extension portion 160, not a portion of the extension portion 160, faces the electrode assembly 130. Therefore, the extension portion 160 of this embodiment may be formed in a position spaced apart from the terrace 145 by a certain distance.

In addition, the extension portion 160 of this embodiment may be formed to protrude from the receiving portion 150 in an angular shape. The extension portion 160 may be formed so that the width becomes narrower as it gets farther away from the electrode assembly 130. For example, the extension portion 160 may be formed in a trapezoidal cross-section. However, the present embodiment is not limited thereto, and various modifications are possible, such as forming the extension portion 160 in a quadrangular or triangular cross-section.

The battery device 10 of the present embodiment configured in this manner may increase the rigidity of the extension portion 160 with respect to the stacking direction (for example, Y-direction) of the battery cells 100, so that even if the extension portion 160 is pressed by another adjacent battery cell 100, the extension portion 160 may not be easily deformed.

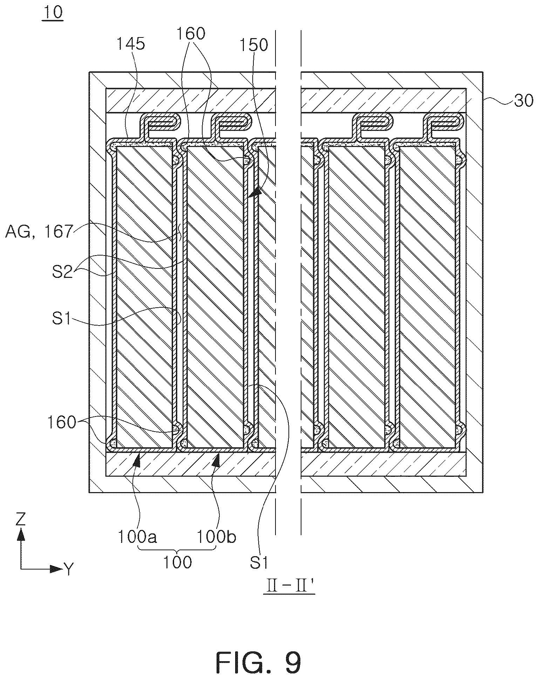

FIG. 9 is a cross-sectional view of a battery device according to another embodiment, and illustrates a cross-section corresponding to II-II' of FIG. 5.

Referring to FIG. 9, a battery cell 100 according to an embodiment has an extension portion 160 formed on both a first surface S1 and a second surface S2 of a receiving portion 150, and the extension portion 160 of the first surface S1 and the extension portion 160 of the second surface S2 may be formed in positions that does not face each other. In this case, the non-faced positions may refer to positions in which the extension portions 160 do not overlap each other or only partially overlap each other when the first surface S1 and the second surface S2 are projected on each other based on the thickness direction of the battery cell 100.

Accordingly, when the first battery cell 100a and the second battery cell 100b are mutually stacked in the first direction, ends of the extension portion 160 formed on the first surface S1 of the first battery cell 100a and the extension portion 160 formed on the second surface S2 of the second battery cell 100b may not contact each other. For example, the extension portion 160 formed on the first surface S1 of the first battery cell 100a may have an end in contact with the second surface S2 of the second battery cell 100b, and the extension portion 160 formed on the second surface S2 of the second battery cell 100b may have an end in contact with the first surface S 1 of the first battery cell 100a.

Accordingly, in the present embodiment, the first battery cell 100a and the second battery cell 100b may be disposed so that at least a portion of a groove portion 167 of the first battery cell 100a overlaps a groove portion 167 of the second battery cell 100b. And at least one of the extension portions 160 of the first battery cell 100a may be disposed within the groove portion 167 of the second battery cell 100b.

As set forth above, according to an embodiment, a cooling path may be formed between battery cells simply by stacking battery cells on each other without a separate member.

The above description is merely an example of applying the principles of the present disclosure, and other configurations may be further included without departing from the scope of the present disclosure.

Only specific examples of implementations of certain embodiments are described. Variations, improvements and enhancements of the disclosed embodiments and other embodiments may be made based on the disclosure of this patent document.

## Claims

1. A battery device comprising:
a cell assembly, including a first battery cell and a second battery cell, stacked in a first direction,
wherein the first battery cell and the second battery cell respectively include a receiving portion in which an electrolyte and an electrode assembly are received within a case, and a plurality of extension portions protruding outwardly from the receiving portion in the first direction, and
the second battery cell is disposed to contact at least one of the extension portions of the first battery cell.

2. The battery device of claim 1, wherein the extension portions are respectively disposed to at least partially face the electrode assembly.

3. The battery device of any one of the preceding claims, wherein the first battery cell and the second battery cell are provided with an air gap therebetween,
wherein a gap of the air gap corresponds to a protruding length of the extension portions.

4. The battery device of any one of the preceding claims, wherein at least one of the extension portions of the first battery cell has a protruding end contacting one of the extension portions of the second battery cell.

5. The battery device of any one of the preceding claims, wherein the first battery cell and the second battery cell are disposed such that at least a portion of a groove portion formed between the extension portions of the first battery cell overlaps a groove portion formed between the extension portions of the second battery cell.

6. The battery device of claim 5, wherein at least one of the extension portions of the first battery cell is disposed within the groove portion of the second battery cell.

7. The battery device of any one of the preceding claims, wherein the extension portions each have a width narrowing away from the electrode assembly.

8. The battery device of any one of the preceding claims, wherein the extension portions respectively protrude from the receiving portion in an angular shape.

9. The battery device of any one of the preceding claims, wherein the plurality of extension portions are provided by drawing-processing the case, and
an internal space of each of the extension portions is filled with the electrolyte.

10. The battery device of any one of the preceding claims, wherein the extension portions are respectively provided in a form of a straight line, parallel to a longitudinal direction of the electrode assembly.

11. A battery cell comprising:
an electrolyte and an electrode assembly sealed inside a case,
wherein the case includes a plurality of extension portions protruding outwardly of the battery cell in a thickness direction, and
the electrolyte is filled inside the extension portions.

12. The battery cell of claim 11, wherein at least two of the plurality of extension portions are spaced apart from each other by a predetermined distance on one surface of the case.
